# EUROPEAN PATENT SPECIFICATION

(11) **EP 3 078 642 B1**
(45) Date of publication and mention of the grant of the patent: **19.08.2020**
(21) Application number: 14867300.7
(22) Date of filing: 03.12.2014
(51) Int. Cl.: C03B 23/023, C03B 35/20, C03B 35/16, C03B 23/03

(54) **GLASS PLATE AND METHOD FOR PRODUCING GLASS PLATE**
GLASPLATTE UND VERFAHREN ZUR HERSTELLUNG EINER GLASPLATTE
PLAQUE DE VERRE ET PROCÉDÉ DE PRODUCTION D'UNE PLAQUE DE VERRE

(30) Priority: 03.12.2013 JP 2013250666
(43) Date of publication of application: 12.10.2016
(73) Proprietor: Nippon Sheet Glass Company, Limited, Tokyo 108-6321 (JP)
(72) Inventor: SHIMOMURA, Takahiro, Tokyo 108-6321 (JP); ANDO, Kenshu, Tokyo 108-6321 (JP); KANNO, Atsuya, Tokyo 108-6321 (JP); KANKI, Satoshi, Tokyo 108-6321 (JP); MACKLEY, Ian, Saint Helens Merseyside WA10 3TT (GB)
(74) Representative: Mewburn Ellis LLP
(86) International application number: PCT/JP2014/081960
(87) International publication number: WO 2015/083734

(56) References cited:
- EP-A1- 0 005 306
- WO-A1-2011/096447
- JP-A- H1 160 256
- JP-A- S6 345 138
- JP-A- 2003 335 533
- US-A- 5 651 805
- US-A1- 2007 056 324
- US-A1- 2007 119 536
- US-A1- 2011 123 730
- US-A1- 2012 295 072

## Description

### Technical Field

The present invention relates to a glass plate according to claim 1 and a method for producing a glass plate according to claim 11.

### Background Art

Glass plates used for transportation machinery such as automobiles and railway vehicles are often molded into a curved shape in view of design or the like. These glass plates are formed by heating a flat glass plate to reduce the rigidity of the glass plate, and molding the glass plate into a curved shape. However, it is not easy to mold a glass plate into a curved shape, and the glass plate may be wrinkled or broken when an abrupt force is applied thereto. Thus, for example, Patent Literature 1 discloses a molding apparatus having an outer mold formed in the shape of a frame and an inner mold arranged inside the outer mold. According to this molding apparatus, first, a heated glass plate is supported by the inner mold, and is subjected to first press molding. Then, the glass plate is transferred from the inner mold to the outer mold, and is then subjected to second press molding. With this processing, the glass plate is prevented from being wrinkled or cracked. EP 0 005 306 A1 discloses two different modes of operation.
Mode 1:
   1. conveying a glass sheet (G) between a lower plenum (36) and an upper vacuum mold (20, 26),
   2.lowering of the upper mold,
   3. upwards blowing air from the lower plenum lifting the central part of the sheet towards the upper vacuum mold, while the upper vacuum mold assists in pre-bending the glass sheet,
   4. press-bending the glass sheet between a curved lower mold (44) and the upper vacuum holder (20, 26),
   5. lifting the upper vacuum mold and
   6. moving the curved lower mold with the curved sheet in the tempering zone.
Mode 2:
   1. conveying a glass sheet (G) between a lower plenum (36) and an upper vacuum mold (20, 26),
   2. lowering of the upper mold,
   3. upwards blowing air from the lower plenum lifting the central part of the sheet towards the upper vacuum mold, while the upper vacuum mold assists in pre-bending the glass sheet,
   4a. separation of the pre-bent sheet by dropping after termination of the upwardly blowing gas from the lower plenum and of the vacuum drawn by the openings of the upper mold (20, 26),
   5a. gravity bending of the sheet on the curved mold ring (44) and
   6. moving the curved lower mold with the curved sheet in the tempering zone.

### Citation List

### Patent Literature

Patent Literature 1: Japanese Patent No. 4052014

### Summary of Invention

### Technical Problem

Incidentally, when molding this sort of curved glass plate, the temperature of the glass plate is required to be controlled in a very narrow range. The demand for thin glass plates has particularly increased recently because of the need for glass plates to be lighter, but it is suggested that the thinner a glass plate is, the more difficult it is to control the temperature thereof. The reason for this is that the thinner a glass plate is, the more likely a difference in temperature is to appear between a center portion and a peripheral edge portion thereof. More specifically, for example, if the glass plate is thin, in particular the peripheral edge portion is cooled quickly, and thus, when the temperature is set such that the center portion is in a desired temperature range, the temperature of the peripheral edge portion is out of this temperature range and decreases. If the temperature of the peripheral edge portion decreases in this manner, there is a concern that the peripheral edge portion will harden sooner than the center portion, and wrinkles will occur around the boundary between the peripheral edge portion and the center portion during molding. As a result, perspective distortion occurs, and, in some cases, the glass may be broken during molding.

The present invention was made in order to solve the above-described problems, and it is an object thereof to provide a method for producing a glass plate, in which a glass plate can be prevented from being wrinkled or broken while being molded into a curved shape.

### Solution to Problem

The present invention is directed to a method for producing a glass plate, including: a conveying-in step of conveying a heated glass plate into a molding apparatus; a first molding step of press-molding the glass plate in a state where at least part of a peripheral edge portion of at least one of an upper face and a lower face of the glass plate is free from contact; a separating step of separating at least a region molded in the first molding step, of the glass plate, from any mold that the region was in contact with; a second molding step of press-molding a region including at least part of the peripheral edge portion of the glass plate; and a conveying-out step of conveying the glass plate subjected to the second molding step, out of the molding apparatus.

With this configuration, in the first molding step, the glass plate is molded in a state where the peripheral edge portion is free from contact. Accordingly, the force acting on the peripheral edge portion due to the molding is alleviated, and, for example, even when the temperature of the peripheral edge portion decreases, a portion between the peripheral edge portion and the center portion can be prevented from being distorted or broken. Furthermore, after the first molding step, a region molded in the first molding step, of the glass plate, separates from any mold that the region was in contact with, after which the glass plate is molded in the second molding step, and thus the glass plate is free from external stress after the completion of the first molding step and before the second molding step. Accordingly, the residual stress that has generated in the glass plate in the first molding step is released. As a result, in the following second molding step, the glass plate can be prevented from being wrinkled or broken. Note that, in the separating step, the glass plate separates from any mold that the region was in contact with, but slight contact may be permitted as long as the glass plate is free from external stress.

The production method according to the present invention is especially advantageous for thin glass plates. Such glass plates have a small heat capacity and are cooled quickly, but, if the heating temperature is made to be high, distortion (e.g., roll distortion, distortion due to transferring onto an uneven surface of a pressing mold, and distortion due to residual stress after cooling) is likely to occur. Accordingly, it is difficult to make the heating temperature high. On the other hand, according to the present invention, a glass plate can be prevented from being distorted or broken as described above even when the temperature of the peripheral edge portion decreases, and thus a thin glass plate can be produced without making the heating temperature high.

In the method for producing a glass plate, it is possible that, in the first molding step, the molding is performed in a state where the entire peripheral edge portion is free from contact, and, in the second molding step, the entire peripheral edge portion is molded.

In the method for producing a glass plate, the molding apparatus may have various configurations, and, for example, it is possible that the molding apparatus has a first mold and a second mold, in the first molding step, the glass plate is molded by the first mold, in the separating step, contact between the glass plate and the first mold is canceled, after which the glass plate is arranged on the second mold, and, in the second molding step, the glass plate is molded by the second mold.

Alternatively, the molding apparatus may have the following configuration. That is to say, it is possible that the molding apparatus has an upper mold and a lower mold that can move up and down, in the first molding step, the glass plate is molded between the upper mold and the lower mold, in the separating step, the lower mold is moved downward, so that at least a region molded in the first molding step, of the glass plate, separates from both the upper mold and the lower mold, and, in the second molding step, a region including at least the peripheral edge portion of the glass plate is molded between the upper mold and the lower mold that has been moved downward.

In the method for producing a glass plate, it is possible that the glass plate has a thickness of 3.0 mm or less.

It is possible that the method for producing a glass plate further includes a step of heating the glass using a heating furnace, before conveying the glass plate into the molding apparatus. Moreover, the molding apparatus may be arranged inside the heating furnace.

In the method for producing a glass plate, it is possible that the first mold includes a first lower mold, the second mold includes a second lower mold, in the first molding step, the molding is performed in a state where the glass plate is supported by the first lower mold, in the contact cancellation step, contact between the glass plate and the first lower mold is canceled, after which the glass plate is arranged on the second lower mold, and, in the second molding step, the molding is performed in a state where the glass plate is supported by the second lower mold.

The first and second lower molds may have various configurations, and, for example, the following configuration is possible. That is to say, the second lower mold is formed in the shape of a frame, and the first lower mold is configured so as to be capable of moving up and down through the frame of the second lower mold. It is possible that, in the first molding step, the glass plate is molded in a state where the first lower mold is positioned above the second lower mold, in the contact cancellation step, the first lower mold is moved downward, so that contact between the glass plate and the first lower mold is canceled, after which the glass plate is allowed to fall onto the second lower mold, and, in the second molding step, the glass plate is molded in a state where the first lower mold is positioned below the second lower mold.

With this configuration, the first lower mold is lowered and the glass plate is allowed to fall onto the second lower mold, so that the glass plate can be shifted from the first lower mold to the second lower mold in a short period of time. Accordingly, the molding time of the glass plate can be shortened. As a result, the glass plate can be molded before the glass plate is significantly cooled, and thus this aspect is advantageous for molding a thin glass plate.

In the method for producing a glass plate, it is possible that the first mold and the second mold include a shared upper mold that can move up and down, in the first molding step, the glass plate is molded between the upper mold and the first lower mold, and, in the second molding step, the glass plate is molded between the upper mold and the second lower mold.

With this configuration, the first mold and the second mold include a shared upper mold that can move up and down, and, after the first molding is performed between the first lower mold and the upper mold in the first molding step, the upper mold is further lowered to perform the second molding between the upper mold and the second lower mold. In this manner, molding can be performed twice with the shared upper mold, by lowering this mold in two steps in this manner, so that the molding time can be shortened.

In the method for producing a glass plate, it is possible that, in the first molding step, the molding is performed in a state where the peripheral edge portion of the glass plate is at a temperature of 600 to 700°C.

Furthermore, the present invention is directed to a method for producing a glass plate, including: a conveying-in step of conveying a heated glass plate into a molding apparatus; a first molding step of press-molding the glass plate using a first mold in a state where a peripheral edge portion of at least one of an upper face and a lower face of the glass plate is free from contact; a contact cancellation step of canceling contact between the glass plate and the first mold, and then arranging the glass plate on a second mold; a second molding step of press-molding a region including at least the peripheral edge portion of the glass using the second mold; and a conveying-out step of conveying the glass plate subjected to the second molding step, out of the molding apparatus.

With this configuration, in the first molding, the glass plate is molded in a state where the peripheral edge portion is free from contact. Accordingly, the force acting on the peripheral edge portion due to the molding is alleviated, and, for example, even when the temperature of the peripheral edge portion decreases, a portion between the peripheral edge portion and the center portion can be prevented from being broken. Furthermore, after the first molding, contact between the glass plate and the first mold is canceled, after which the glass plate is arranged on the second mold, and thus the glass plate is free from external stress during shifting from the first mold to the second mold. Accordingly, the residual stress that has generated in the glass plate in the first molding is released. As a result, in the following in the second molding, the glass plate can be prevented from being wrinkled or broken.

The present invention is directed to a glass plate press-molded into a curved shape, having a thickness of 1.0 to 3.0 mm, and having plane residual stress distribution that changes from a peripheral edge toward a center portion for substantially the entire perimeter of the glass plate, wherein the plane residual stress is compressive stress at the peripheral edge and gradually changes into tensile stress toward the center portion, and the plane residual stress distribution indicating the tensile stress has a plurality of local maximums and there is no compressive stress in the center portion side from the closest local maximum of the tensile stress to the peripheral edge.

In the glass plate, it is possible that the plurality of local maximums of the tensile stress indicate tensile stress that is larger toward the peripheral edge.

### Advantageous Effects of Invention

According to the present invention, a glass plate can be prevented from being wrinkled or broken while being molded into a curved shape.

### Brief Description of Drawings

FIG. 1 is a plan view of a production line showing an embodiment of a method for producing glass plates according to the present invention.
FIG. 2 is a side view of FIG. 1.
FIG. 3 is a schematic plan view showing thickness measurement positions of a glass plate.
FIG. 4 is a plan view of a molding apparatus.
FIG. 5 is a front view of FIG. 3.
FIG. 6 is a side view of FIG. 3.
FIG. 7 is a front view showing an operation of the molding apparatus.
FIG. 8 is a front view showing an operation of the molding apparatus.
FIG. 9 is a front view showing an operation of the molding apparatus.
FIG. 10 is a front view showing an operation of the molding apparatus.
FIG. 11 is a front view showing an operation of the molding apparatus.
FIG. 12 is a front view showing an operation of the molding apparatus.
FIG. 13 is a front view showing an operation of the molding apparatus.
FIG. 14 is a graph showing plane residual stress distribution in glass plates.
FIG. 15 is a front view showing an operation of another molding apparatus.
FIG. 16 is a front view showing an operation of the other molding apparatus.
FIG. 17 is a front view showing an operation of the other molding apparatus.
FIG. 18 is a front view showing an operation of the other molding apparatus.
FIG. 19 is a front view showing an operation of the other molding apparatus.
FIG. 20 is a front view showing an operation of the other molding apparatus.

### Description of Embodiment

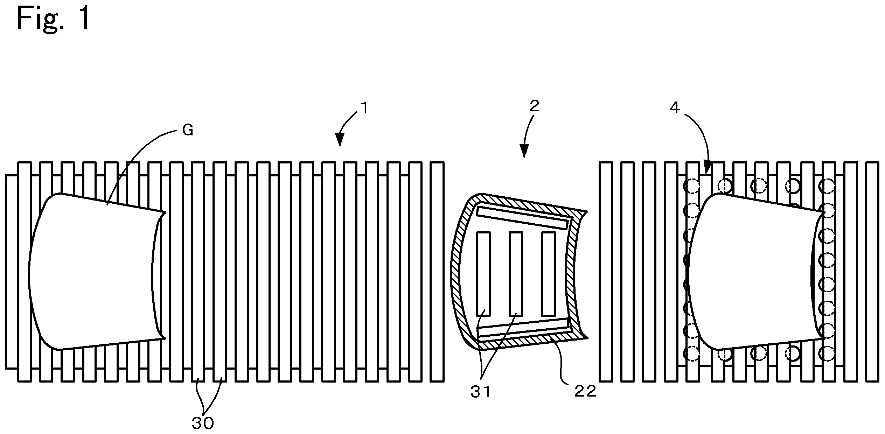

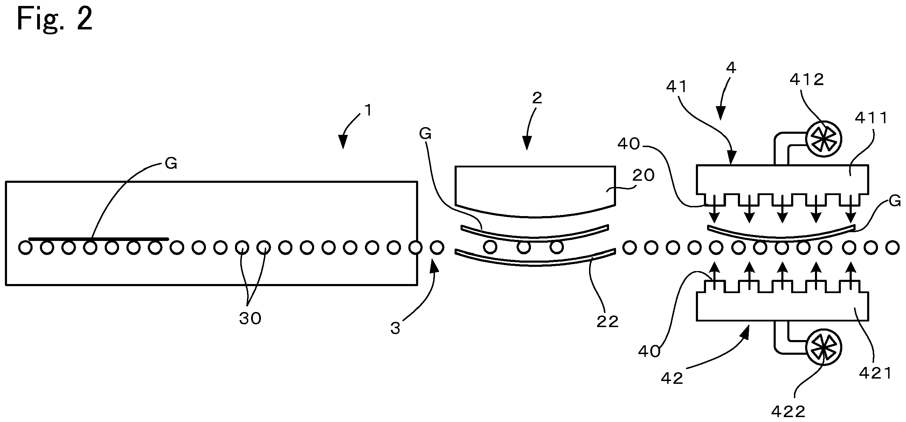

Hereinafter, an embodiment of a method for producing a glass plate according to the present invention will be described with reference to the drawings. FIG. 1 is a plan view showing part of a production line of glass plates according to this embodiment, and FIG. 2 is a side view of FIG. 1. In the description below, for the sake of ease of description, an upstream side of the production line may be referred to as "rear", and a downstream side may be referred to as "front" or a "forward side". Furthermore, a direction perpendicular to the advancing direction of the production line may be referred to as a "left-right direction" or a "side direction".

### 1. Summary of Production Line

As shown in FIGS. 1 and 2, this production line has a heating furnace 1, a molding apparatus 2, and a cooling apparatus 4 that are arranged in this order from upstream to downstream. Furthermore, a roller conveyor 3 is arranged so as to run from the heating furnace 1, the molding apparatus 2, the cooling apparatus 4 and to the downstream side thereof, and a glass plate G that is to be processed is conveyed by the roller conveyor 3. Note that, in order to make the glass plate G lighter, the thickness of the glass plate G after molding in this case is, for example, preferably 0.7 to 6.0 mm, more preferably 1.0 to 3.0 mm, and even more preferably 1.0 to 2.3 mm. In this example, the molding apparatus 2 and the cooling apparatus 4 are arranged separately, but the molding apparatus 2 may be provided with a cooling function as in known techniques .

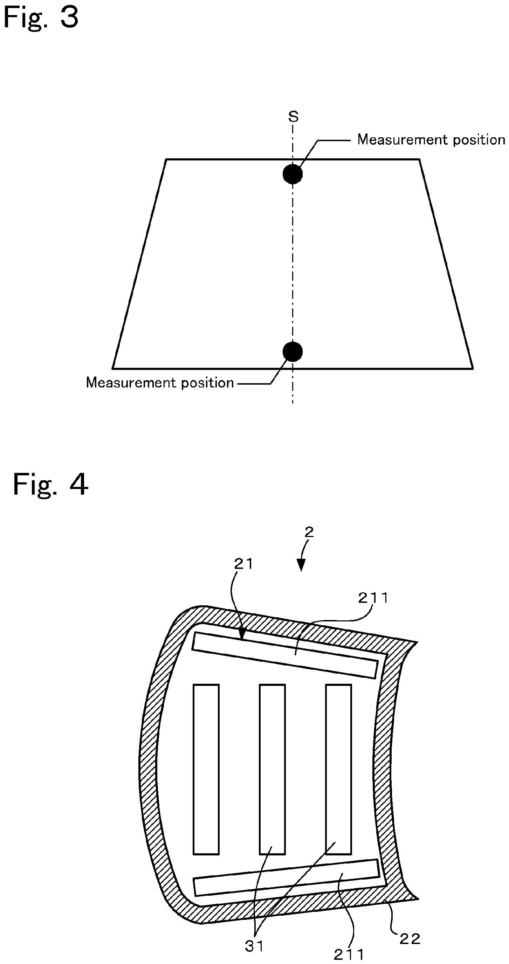

Hereinafter, an example of a method for measuring thickness when the glass plate G is curved will be described. First, as shown in FIG. 3, the measurement positions are set in two places, an upper and lower position on a center line S extending in the upper-lower direction through the center in the left-right direction of the glass plate G. There is no particular limitation on the measurement device, and examples thereof include a thickness gauge such as an SM-112 manufactured by Teclock. At the time of measurement, a glass plate is arranged such that its curved face is positioned on a flat face, and the measurement is performed by causing the thickness gauge to hold an end portion of the glass plate G. Also when the glass plate G is flat, the measurement can be performed as in the case where the glass plate G is curved.

The heating furnace 1 may have various configurations, and, for example, it may be an electric heating furnace. This electric heating furnace includes a furnace main body in the shape of a square tube that is open at the upstream and downstream end portions, and the roller conveyor 3 is arranged therein so as to run from upstream to downstream. Heaters (not shown) are respectively arranged on an upper face, a lower face, and a pair of side faces of the inner wall of the furnace main body, and heat the glass plate G that passes through the heating furnace 1, to a temperature at which molding can be performed, such as 600 to 700°C.

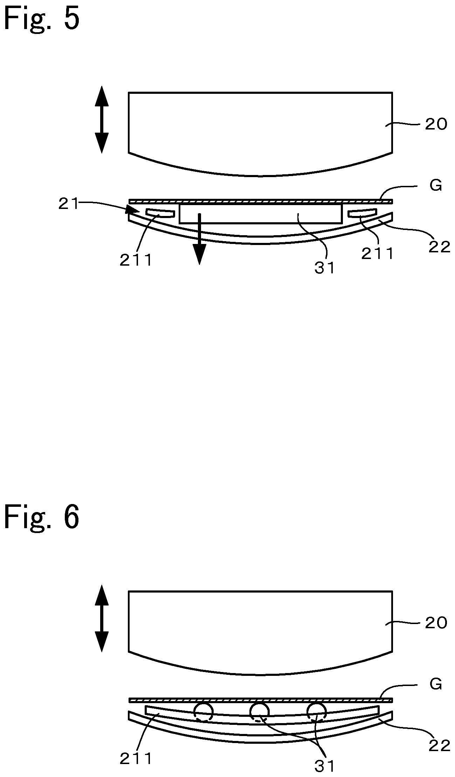

Next, the molding apparatus 2 will be described. FIG. 4 is a plan view of the molding apparatus, FIG. 5 is a front view of FIG. 4, and FIG. 6 is a side view of FIG. 4. As shown in FIGS. 4 to 6, this molding apparatus includes one upper mold 20 and two lower molds, that is, a first lower mold 21 and a second lower mold 22, and performs two-step molding consisting of first molding and second molding on the glass plate G. The upper mold 20 has a curved face that is convex downward and covers the entire upper face of the glass plate G, and is configured so as to be capable of moving up and down. The surface of the upper mold 21 accommodates a heater (not shown) so as to generate heat, and can heat the glass plate G. Meanwhile, the second lower mold 22 is formed in the shape of a frame that conforms to the peripheral edge portion of the glass plate G, and includes an upper face having a curved shape that conforms to the upper mold 20. With this configuration, the glass plate G is press-molded between the upper mold 20 and the second lowed mold 22 into a final curved shape.

Meanwhile, the first lower mold 21 is configured by a pair of support members 211 arranged apart from each other in the left-right direction and extending in the front-rear direction, and the support members 211 are supported such that they can move up and down through the frame of the second lower mold 22. The pair of support members 211 are arranged so as to support both side portions of the glass plate G from below, and each have an upper face curved such that the center portion projects so as to be positioned below the front portion and the rear portion as shown in FIG. 6. This curve generally has a larger radius of curvature than the curve of the lower face of the glass plate G formed by the second lower mold 22.

A roller conveyor 31 is arranged between the support members 211, and the roller conveyor 31 can move up and down through the frame of the first lower mold 21.

Furthermore, the cooling apparatus 4 described above is arranged on the downstream side of the molding apparatus 2. The cooling apparatus 4 includes an upper apparatus 41 and a lower apparatus 42 that are arranged such that the roller conveyor 3 is interposed therebetween in the upper-lower direction. The upper apparatus 41 and the lower apparatus 42 respectively include nozzle boxes 411 and 421 having a plurality of nozzles 40 that are open to the roller conveyor 3, and air blowers 412 and 422 that supply air to the nozzle boxes 411 and 421.

### 2. Glass Molding Process

Next, molding processing of glass by the thus configured production line will be described with reference to FIGS. 6 to 12. First, the flat glass plate G that has been heated while passing through the heating furnace 1 is conveyed into the molding apparatus 2. At this time, as shown in FIGS. 5 and 6, the molding apparatus 2 is such that the first lower mold 21 is lifted through the frame of the second lower mold 22, and the first lower mold 21 is positioned above the second lower mold 22. At this time, the first lower mold 21 may be positioned above the second lower mold 22, for example, by 0 to 20 mm at the ends of the molds. The reason for this is that, if the positon of the first lower mold 21 is too high, the impact when the glass plate G falls increases as described later, and, if the position is too low, the glass plate G may not separate completely from the first lower mold 21. Furthermore, the roller conveyor 31 is positioned above the first lower mold 21, and is arranged at a height that is substantially the same as the height of the roller conveyor 3 extending from the heating furnace 1 to the molding apparatus 2. Furthermore, the upper mold 20 has been lifted, and forms a gap through which the glass plate G can be conveyed, between the upper mold 20 and the roller conveyor 31.

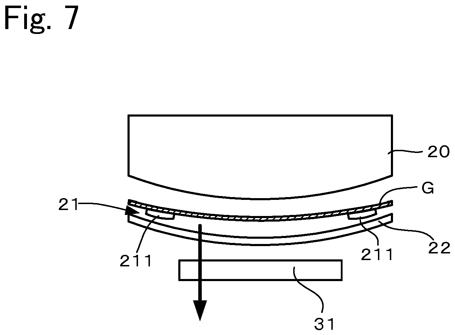

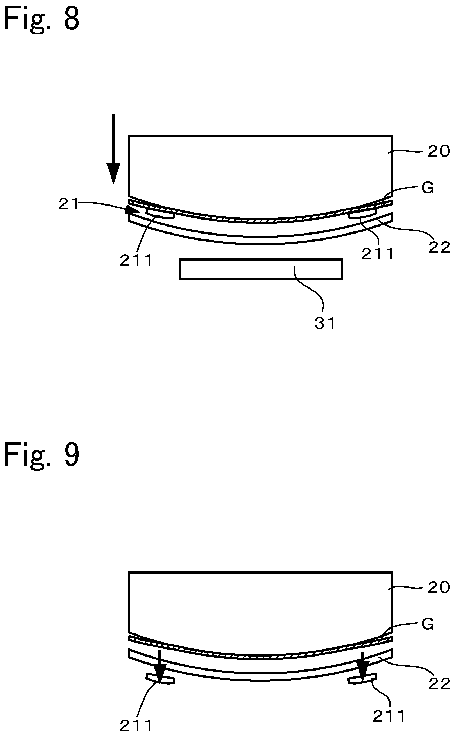

In this state, when the glass plate G is conveyed onto the roller conveyor 31 in the molding apparatus 2, as shown in FIG. 7, the roller conveyor 31 is lowered, and the glass plate G is supported by the first lower mold 21. That is to say, the glass plate G is transferred from the roller conveyor 31 to the first lower mold 21. Subsequently, as shown in FIG. 8, the upper mold 20 is lowered, and the glass plate G is pressed between the upper mold 20 and the first lower mold 21. That is to say, first molding is performed. At this time, the first lower mold 21 is positioned inward of the frame of the second lower mold 22, so that the peripheral edge portion of the glass plate G is free from contact, on the lower face of the glass plate G. On the other hand, the entire upper face of the glass plate G is pressed by the upper mold 20, but since the curve of the support members 211 of the first lower mold 21 has a larger radius of curvature than the curve of the second lower mold 22, a gently curved face is molded.

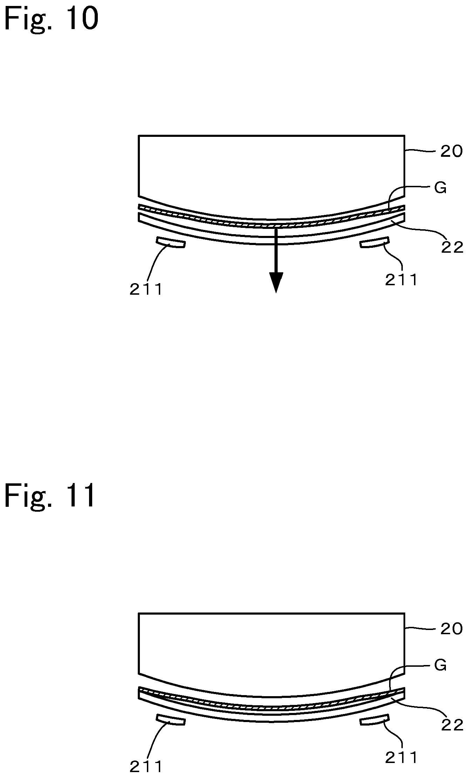

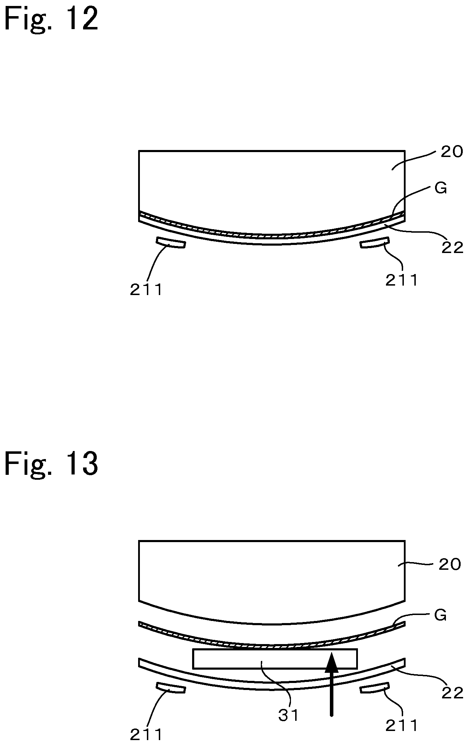

After the glass plate G is pressed between the upper mold 20 and the first lower mold 21 in this manner for a predetermined period of time, as shown in FIG. 9, the first lower mold 21 is lowered. The speed at which the first lower mold 21 is lowered at this time is set to be higher than the speed at which the glass plate G freely falls. Accordingly, the glass plate G cannot follow the lowering of the first lower mold 21, and the contact state between the glass plate G and the first lower mold 21 is canceled when the first lower mold 21 is lowered. Then, as shown in FIGS. 10 and 11, the glass plate G separates under its own weight from the upper mold 20, and falls onto the second lower mold 22. Subsequently, as shown in FIG. 12, the upper mold 20 is lowered from the position at which the first molding was performed, and the glass plate G is pressed between the upper mold 20 and the second lower mold 22 for a predetermined period of time. That is to say, second molding is performed.

After the second molding is completed in this manner, as shown in FIG. 13, the roller conveyor 31 is lifted to support the glass plate G. Subsequently, the glass plate G is conveyed by the roller conveyor 31 out of the molding apparatus 2, and is conveyed to the cooling apparatus 4. In the cooling apparatus 4, the air blowers 412 and 422 are driven to blow air onto the glass plate G from the upper apparatus 41 and the lower apparatus 42, so that the glass plate G is cooled. In this manner, the molding of the glass plate G is completed.

### 3. Properties

As described above, according to this embodiment, in the first molding, the glass plate G is molded in a state where the peripheral edge portion of the glass plate G is free from contact. Accordingly, the force acting on the peripheral edge portion due to the molding is alleviated, and, for example, even when the temperature of the peripheral edge portion decreases, a portion between the peripheral edge portion and the center portion can be prevented from being broken. After the glass plate G is subjected to the first molding between the upper mold 20 and the first lower mold 21, the first lower mold 21 is lowered, so that the contact state between the glass plate G and the first lower mold 21 is canceled. At this time, the glass plate G falls after the lowering of the first lower mold 21, and thus the contact state between the glass plate G and the upper mold 20 is also canceled. Subsequently, the second molding is performed between the upper mold 20 and the second lower mold 22 in a state where the glass plate G is supported by the second lower mold 22.

After the glass plate G is pressed between the upper mold 20 and the first lower mold 21 in this manner, as shown in FIG. 9, the glass plate G is not in contact with either the upper mold 20 or the first lower mold 21, after which the glass plate G is pressed between the upper mold 20 and the second lower mold 22. Accordingly, when the contact is canceled, the glass plate G is free from any stress, and the residual stress that has occurred due to the first molding is released. As a result, the glass plate G is prevented from being broken in the following second molding.

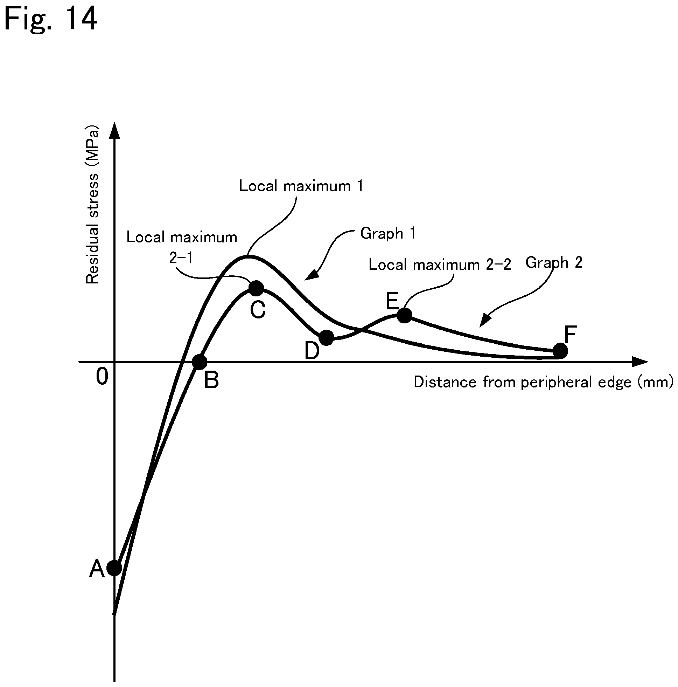

The thus molded glass plate may have, for example, the following properties. FIG. 14 is a graph showing plane residual stress distribution in glass plates, where the horizontal axis indicates a distance from a peripheral edge of a glass plate in a direction toward a center portion, and the vertical axis indicates stress. Note that the stress is indicated taking compression as negative and tension as positive. In FIG. 14, a graph 1 shows plane residual stress distribution in a conventional glass plate molded using the upper mold 20 and the second lower mold 22 without using the first lower mold 21. Meanwhile, a graph 2 shows plane residual stress distribution in a glass plate molded using the above-described molding apparatus.

According to the graph 1, the plane residual stress of the glass plate indicates compression at the peripheral edge of the glass plate and gradually changes into tension from the peripheral edge toward the center portion. After the stress changes from compression to tension, the tensile stress has a local maximum 1 that then decreases toward 0.

On the other hand, as shown in the graph 2, since the glass plate was molded by the above-described molding apparatus using the two lower molds 21 and 22, the tensile stress has two local maximums (local maximums 2-1(C) and 2-2(E)) near the region that was in contact with the first lower mold 21 and near the region that was in contact with the second lower mold 22. It is conceivable that this plane residual stress distribution is formed by the residual stress distribution resulting from the molding by the first lower mold 21 overlapping the residual stress distribution resulting from the molding by the second lower mold 22. Accordingly, the tensile stress (local maximum 2-1) corresponding to the second lower mold 22 in the graph 2 is smaller than the tensile stress (local maximum 1) corresponding to the second lower mold 22 in the graph 1. Accordingly, it can be said that the strength of the glass plate indicated by the graph 2, that is, the glass plate molded by the molding apparatus according to the foregoing embodiment is higher than that of the glass plate indicated by the graph 1.

Note that the glass plate as indicated by the graph 2 has properties, for example, such that the coordinates in the graph 2 are A (0, -20), B (10, 0), C (20, 8), D (30, 3), E (40, 6), and F (100, 0) .

Since this glass plate was molded using a plurality of lower molds, the tensile stress has a plurality of local maximums, and thus the tensile stress at each local maximum is lower than that when a single lower mold is used. Accordingly, when using three or more lower molds, the number of local maximums may be more than two as described above. Furthermore, in the graph 2, the tensile stress at the local maximums in the above-described example is such that the local maximum 2-1 is larger than the local maximum 2-2, but there is no limitation to this, and, for example, the tensile stress at the local maximum on the center portion side may be larger than that on the peripheral edge side. Furthermore, these properties do not have to be exhibited for the entire perimeter of the glass plate, and it is sufficient that these properties are exhibited for approximately 90% or more of the entire perimeter.

### 4. Modified Examples

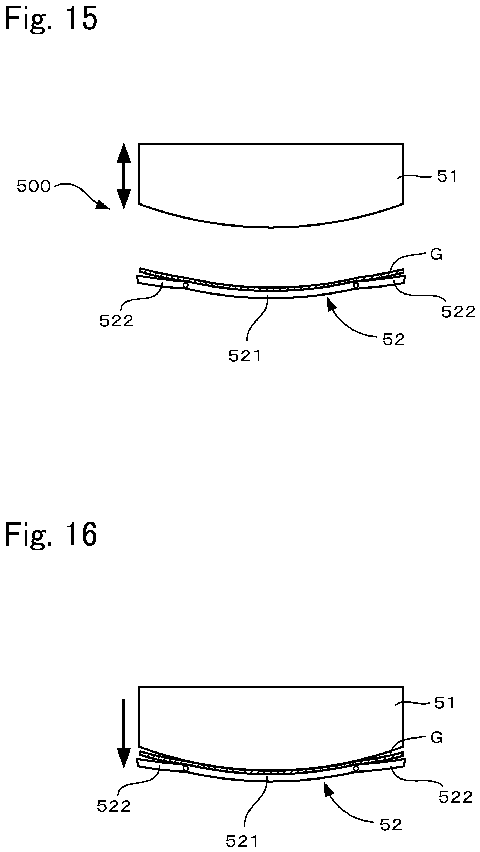

Above, an embodiment of the present invention was described, but the present invention is not limited to the foregoing embodiment. Furthermore, a plurality of modified examples described below may be combined as appropriate.
4.1 Although the first lower mold 21 is configured by the pair of support members 211 extending in the front-rear direction in the foregoing embodiment, there is no particular limitation on the shape of the first lower mold 21 as long as a peripheral edge portion of at least one of an upper face and a lower face of the glass plate G is free from contact. For example, the first lower mold 21 may be configured by a pair of support members extending in the left-right direction and arranged on the upstream side and the downstream side. Also, as in the case of the second lower mold 22, the first lower mold 21 may be formed in the shape of a frame. This frame is formed so as to be smaller than the contour of the glass plate G such that the peripheral edge portion of the glass plate G is free from contact. Furthermore, it is sufficient that the upper face of the first lower mold 21 has a degree of curve that is not the same as that of the second lower mold 22, and is curved more gently than that of the second lower mold 22. Furthermore, in the foregoing embodiment, the first lower mold 21 is configured so as to move up and down through the frame of the second lower mold 22, but may be configured so as to move up and down outside the frame.
4.2 In the foregoing embodiment, the entire peripheral edge portion of the glass plate is free from contact in the first molding, and the entire peripheral edge portion is molded using a mold in the second molding, but there is no limitation to this . For example, only part of the peripheral edge portion of the glass plate may be free from contact in the first molding, and the part of the peripheral edge portion free from contact in the first molding may be molded in the second molding.
4.3 In the foregoing embodiment, the glass plate G is press-molded between the upper mold 20 and the first lower mold 21 in the first molding, but the glass plate G may be molded by being arranged on the first lower mold 21, without using the upper mold 20. That is to say, the glass plate G may be molded so as to conform to the first lower mold 21 under the glass plate G's own weight. Then, in the second molding, the molding is performed between the upper mold 20 and the second lower mold 22.
4.4 In the foregoing embodiment, the heating furnace 1 is arranged on the upstream side of the molding apparatus 2, but the molding apparatus may be arranged inside the heating furnace 1.
4.5 In the foregoing embodiment, the cooling apparatus 4 is arranged on the downstream side of the molding apparatus 2, but there is no particular limitation on the position at which the cooling apparatus is arranged. For example, the cooling apparatus 4 may be arranged inside the molding apparatus 2 so that the glass plate G is cooled immediately after the press molding.
4.6 In the foregoing embodiment, the first molding and the second molding are performed respectively using different lower molds while sharing an upper mold, but, as shown in FIGS. 15 to 20, a shared lower mold may be used. For example, a molding apparatus 500 shown in FIG. 15 includes an upper mold 51 and a lower mold 52. The lower face, that is, the molding face of the upper mold 51 has a curved face that is convex downward and covers the entire upper face of the glass plate G. Furthermore, the upper mold 51 is supported such that it can move up and down closer to or away from the lower mold 52. Meanwhile, the lower mold 52 is configured by three parts, that is, a center member 521 forming a center portion and a pair of side members 522 respectively arranged on both sides of the center member 521, and is formed in the shape of a frame by combining these three parts. The center member 521 is formed in a concave shape that projects downward, and its upper face functioning as a molding face has a shape that conforms to the center portion of the upper mold 51. The center member 521 is supported such that it can move up and down. Meanwhile, the side members 522 are connected to the side portions of the center member 521 such that they can swing up and down, and molding faces on their upper faces have shapes that conform to the side portions in the molding face of the upper mold 51. In this example, the upper faces of the side members 522 are inclined upward so as to respectively conform to the side portions of the upper mold 51.

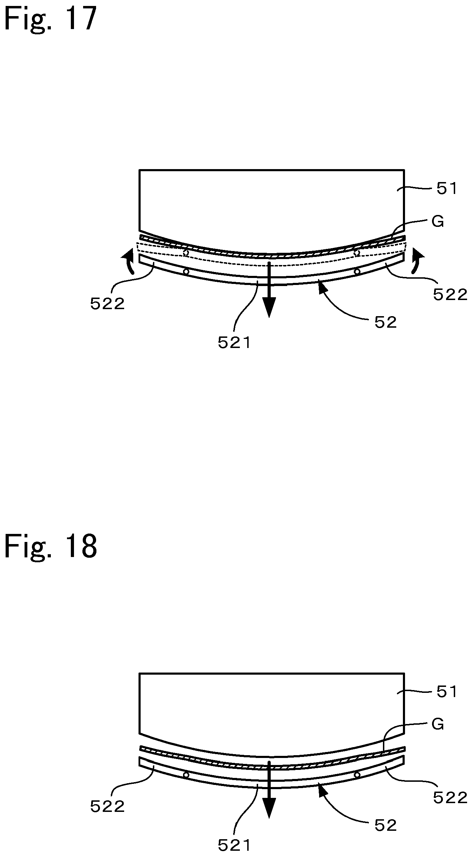

The lower mold 52 is configured so as to be capable of taking two positions. That is to say, the lower mold 52 may take a first position at which the center portion of the glass plate G is press-molded as shown in FIG. 15, and a second position at which the entire glass plate G is press-molded into a final shape as shown in FIG. 17. At the first position, the swing positions of the side members 522 are determined such that the upper faces of the side members 522 are not in contact with the side portions of the upper mold 51. Meanwhile, at the second position, the center member 521 moves downward, and the side members 522 swing upward in accordance with this movement, so that the upper faces of the side members 522 are arranged so as to face the side portions of the upper mold 51. At this time, the upper face of the lower mold 52 has a shape that conforms to the lower face of the upper mold 51 due to the displacement of the center member 521 and the pair of side members 522.

Next, the molding of the glass plate G using the molding apparatus 500 will be described. First, before the glass plate G is conveyed from the heating furnace 1 into the molding apparatus 500, the lower mold 52 is shifted to the first position. In this state, when the glass plate G is conveyed onto the lower mold 52, the upper mold 51 is lowered as shown in FIG. 16 to perform press molding (first molding) . At this time, the side members 522 of the lower mold 52 are arranged so as not to be in contact with the side portions of the upper mold 51, and thus the glass plate G is press-molded between the center portion of the upper mold 51 and the center member 521 of the lower mold 52. That is to say, the peripheral edge portion of the glass plate G is free from contact, on the upper face and the lower face of the glass plate G, and only the center portion is molded.

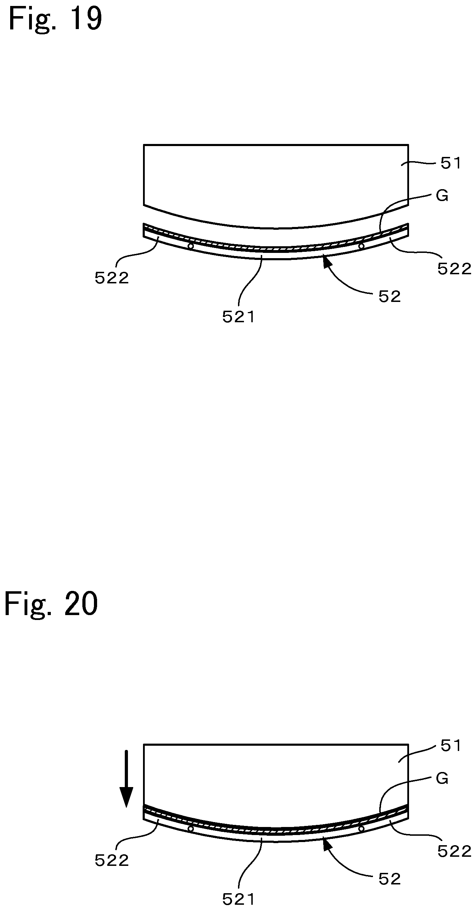

Subsequently, as shown in FIG. 17, the center member 521 of the lower mold 52 is lowered by approximately 0 to 20 mm. At this time, the side members 522 swing upward in accordance with the lowering of the center member 521, and the lower mold 52 is shifted to the second position. The speed at which the center member 521 is lowered at this time is set to be higher than the speed at which the glass plate G freely falls. Accordingly, the glass plate G cannot follow the lowering of the center member 521, and the contact state between the glass plate G and the center member 521 is canceled when the center member 521 is lowered. Subsequently, as shown in FIGS. 18 and 19, the glass plate G separates under its own weight from the upper mold 51, and falls onto the lower mold 52. Subsequently, as shown in FIG. 20, the upper mold 51 is lowered from the position at which the first molding was performed, and the glass plate G is pressed between the upper mold 51 and the lower mold 52 for a predetermined period of time press (second molding) . After the second molding is completed in this manner, the glass plate G is cooled using a method as described above, and the molding of the glass plate G is completed. Also in the case of this molding apparatus, the glass plate G is free from stress between the first molding and the second molding, so that the glass plate G can be prevented from being wrinkled or broken as in the foregoing embodiment.

Although the lower mold 52 is configured by the center member 521 and the side members 522 that are arranged on both sides of the center member 521 in this example, the side members 522 that can swing may be provided in front and rear of the center member 521. This molding apparatus also can mold a glass plate having the properties shown in FIG. 14.

The glass plate as shown in FIG. 14 can be molded by apparatuses other than the above-described molding apparatuses. That is to say, it is possible to form a glass plate having a plurality of local maximums in tensile residual stress distribution as shown in FIG. 14, by performing molding with a mold at a plurality of locations in a direction from the peripheral edge to the center portion of the glass plate.

Furthermore, such a glass plate can be molded by the following molding apparatus. First, a glass plate is placed on a ring-like (frame-like) mold. This mold is arranged on a conveyor member, and the conveyor member passes through a known heating furnace and slow cooling furnace in a state where the glass plate is placed on the mold. In the heating furnace, a heater is provided to at least one of above and below the path of the conveyor member, and this heater heats the glass plate.

Hereinafter, the mold will be described in more detail. The mold includes a mold main body in the shape of a frame that substantially conforms to the outer shape of the glass plate. Since the mold main body is formed in the shape of a frame, it has an inner space extending in the upper-lower direction through the frame. The peripheral edge portion of the flat glass plate is placed on the upper face of the mold main body.

If a heater is provided below the mold so as to heat the glass plate, a shielding plate for heat shielding may be provided on the inner peripheral edge of the mold main body in order to control heat that is to be imparted to the glass plate. Accordingly, for example, heat that is to be imparted to the vicinity of the peripheral edge of the glass plate is suppressed, and the vicinity of the peripheral edge of the glass plate can be prevented from being curved excessively.

Furthermore, if a heater is provided above the mold, for example, a heat shielding plate as described in JP 2005-343747A may be provided above the glass plate, so that heat from above can be controlled. More specifically, space above the glass plate is divided in the horizontal direction into a plurality of areas, and a plurality of heat shielding plates are suspended from above along the boundaries between the areas . Accordingly, heat from the heater is imparted to the glass plate only from above, and, for example, heat can be prevented from obliquely entering an area from the outside of that area. Thus, heat that is to be imparted to the glass plate may be controlled in the plane direction. Note that these upper and lower heaters may be combined as appropriate.

In this manner, the glass plate passes through the heating furnace in a state where its peripheral edge portion is supported by the mold. When heating is performed inside the heating furnace to a temperature near the softening point, the glass plate curves under its own weight such that the inner side is positioned below the peripheral edge portion, and is molded into a curved shape. Also in the case of this mold, it is possible to mold a glass plate having the properties as shown in FIG. 14, by controlling heat that is to be imparted to the glass plate, or changing as appropriate the position, the shape, and the number of portions of the mold main body for supporting the glass plate.

### Reference Signs List

- 1: Heating furnace
- 2: Molding apparatus
- 20: Upper mold
- 21: First lower mold
- 22: Second lower mold
- 3: Roller conveyor
- G: Glass plate

## Claims

1. A method for producing a glass plate (G), comprising:
a conveying-in step of conveying a heated glass plate (G) into a molding apparatus (2);
a first molding step of press-molding the glass plate (G) in a state where at least part of a peripheral edge portion of at least one of an upper face and a lower face of the glass plate (G) is free from contact;
a separating step of separating at least a region molded in the first molding step, of the glass plate (G), from any mold that the region was in contact with;
a second molding step of press-molding a region including at least part of the peripheral edge portion of the glass plate (G); and
a conveying-out step of conveying the glass plate (G) subjected to the second molding step, out of the molding apparatus (2).

2. The method for producing a glass plate (G) according to claim 1,
wherein, in the first molding step, the molding is performed in a state where the entire peripheral edge portion is free from contact, and
in the second molding step, the entire peripheral edge portion is molded.

3. The method for producing a glass plate (G) according to claim 1 or 2,
wherein the molding apparatus (2) has a first mold and a second mold,
in the first molding step, the glass plate (G) is molded by the first mold,
in the separating step, contact between the glass plate (G) and the first mold is canceled, after which the glass plate (G) is arranged on the second mold, and
in the second molding step, the glass plate (G) is molded by the second mold.

4. The method for producing a glass plate (G) according to any one of claims 1 to 3, wherein the glass plate (G) has a thickness of 3.0 mm or less.

5. The method for producing a glass plate (G) according to any one of claims 1 to 4, further comprising:
a step of heating the glass using a heating furnace (1), before conveying the glass plate (G) into the molding apparatus (2) .

6. The method for producing a glass plate (G) according to any one of claims 3 to 5,
wherein the first mold includes a first lower mold (21),
the second mold includes a second lower mold (22),
in the first molding step, the molding is performed in a state where the glass plate (G) is supported by the first lower mold (21),
in the separating step, contact between the glass plate (G) and the first lower mold (21) is canceled, after which the glass plate (G) is arranged on the second lower mold (22), and
in the second molding step, the molding is performed in a state where the glass plate (G) is supported by the second lower mold (22).

7. The method for producing a glass plate (G) according to claim 6,
wherein the second lower mold (22) is formed in the shape of a frame,
the first lower mold (21) is configured so as to be capable of moving up and down through the frame or outside the frame of the second lower mold (22),
in the first molding step, the glass plate (G) is molded in a state where the first lower mold (21) is positioned above the second lower mold (22),
in the separating step, the first lower mold (21) is moved downward, so that contact between the glass plate (G) and the first lower mold (21) is canceled, after which the glass plate (G) is allowed to fall onto the second lower mold (22), and
in the second molding step, the glass plate (G) is molded in a state where the first lower mold (21) is positioned below the second lower mold (22).

8. The method for producing a glass plate (G) according to claim 6 or 7,
wherein the first mold and the second mold include a shared upper mold (20) that can move up and down,
in the first molding step, the glass plate (G) is molded between the upper mold (20) and the first lower mold (21), and
in the second molding step, the glass plate (G) is molded between the upper mold (20) and the second lower mold (22).

9. The method for producing a glass plate (G) according to any one of claims 1 to 8, wherein, in the first molding step, the molding is performed in a state where the peripheral edge portion of the glass plate (G) is at a temperature of 600 to 700°C.

10. The method for producing a glass plate (G) according to claim 1 or 2,
wherein the molding apparatus (2) has an upper mold (20) and a lower mold that can move up and down,
in the first molding step, the glass plate (G) is molded between the upper mold (20) and the lower mold,
in the separating step, the lower mold is moved downward, so that at least a region molded in the first molding step, of the glass plate (G), separates from both the upper mold (20) and the lower mold, and
in the second molding step, a region including at least the peripheral edge portion of the glass plate (G) is molded between the upper mold (20) and the lower mold that has been moved downward.

11. A glass plate (G),
press-molded into a curved shape,
having a thickness of 1.0 to 3.0 mm, and
having plane residual stress distribution that changes from a peripheral edge toward a center portion for the entire perimeter of the glass plate (G),
wherein the plane residual stress is compressive stress at the peripheral edge and gradually changes into tensile stress toward the center portion,
the plane residual stress distribution indicating the tensile stress has a plurality of local maximums, and
there is no compressive stress in the center portion side from the closest local maximum of the tensile stress to the peripheral edge.

12. The glass plate (G) according to claim 11, wherein the plurality of local maximums of the tensile stress indicate tensile stress that is larger toward the peripheral edge.

13. The glass plate (G) according to claim 11, wherein there is no compressive stress of the plane residual stress from the portion at the first local maximum toward the center portion.

14. The glass plate (G) according to claim 11, wherein there is no compressive stress of the plane residual stress between the first two local maximums closest to the peripheral edge.

## Patentansprüche

1. Verfahren zur Herstellung einer Glasplatte (G), umfassend:
einen Einförderschritt zum Einfördern einer erhitzten Glasplatte (G) in eine Formvorrichtung (2);
einen ersten Formschritt zum Pressformen der Glasplatte (G) in einem Zustand, in dem zumindest ein Teil eines Umfangskantenabschnitts von zumindest einer aus einer oberen Seite und einer unteren Seite der Glasplatte (G) berührungsfrei ist;
einen Trennschritt zum Trennen von zumindest einem Bereich der Glasplatte (G), der in dem ersten Formschritt geformt wurde, von allen Formen, mit denen der Bereich in Kontakt stand;
einen zweiten Formschritt zum Pressformen eines Bereichs einschließlich zumindest eines Teils des Umfangskantenabschnitts der Glasplatte (G); und
einen Ausförderschritt zum Ausfördern der Glasplatte (G), die dem zweiten Formschritt unterzogen wurde, aus der Formvorrichtung (2).

2. Verfahren zur Herstellung einer Glasplatte (G) nach Anspruch 1,
wobei in dem ersten Formschritt das Formen in einem Zustand durchgeführt wird, in dem der gesamte Umfangskantenabschnitt berührungsfrei ist, und
in dem zweiten Formschritt der gesamte Umfangskantenabschnitt geformt wird.

3. Verfahren zur Herstellung einer Glasplatte (G) nach Anspruch 1 oder 2,
wobei die Formvorrichtung (2) eine erste Form und eine zweite Form aufweist,
in dem ersten Formschritt die Glasplatte (G) durch die erste Form geformt wird,
in dem Trennschritt der Kontakt zwischen der Glasplatte (G) und der ersten Form unterbrochen wird, wonach die Glasplatte (G) auf der zweiten Form angeordnet wird, und
in dem zweiten Formschritt die Glasplatte (G) durch die zweite Form geformt wird.

4. Verfahren zur Herstellung einer Glasplatte (G) nach einem der Ansprüche 1 bis 3, wobei die Glasplatte (G) eine Dicke von 3,0 mm oder weniger aufweist.

5. Verfahren zur Herstellung einer Glasplatte (G) nach einem der Ansprüche 1 bis 4, ferner umfassend:
einen Schritt zum Erhitzen des Glases unter Verwendung eines Heizofens (1) vor dem Einfördern der Glasplatte (G) in die Formvorrichtung (2).

6. Verfahren zur Herstellung einer Glasplatte (G) nach einem der Ansprüche 3 bis 5,
wobei die erste Form eine erste untere Form (21) umfasst,
die zweite Form eine zweite untere Form (22) umfasst,
in dem ersten Formschritt das Formen in einem Zustand durchgeführt wird, in dem die Glasplatte (G) von der ersten unteren Form (21) getragen wird,
in dem Trennschritt der Kontakt zwischen der Glasplatte (G) und der ersten unteren Form (21) unterbrochen wird, wonach die Glasplatte (G) auf der zweiten unteren Form (22) angeordnet wird, und
in dem zweiten Formschritt das Formen in einem Zustand durchgeführt wird, in dem die Glasplatte (G) von der zweiten unteren Form (22) getragen wird.

7. Verfahren zur Herstellung einer Glasplatte (G) nach Anspruch 6,
wobei die zweite untere Form (22) in Form eines Rahmens geformt ist,
die erste untere Form (21) ausgelegt ist, in der Lage zu sein, sich auf der zweiten unteren Form (22) durch den Rahmen auf und ab oder aus dem Rahmen hinaus zu bewegen,
in dem ersten Formschritt die Glasplatte (G) in einem Zustand geformt wird, in dem die erste untere Form (21) oberhalb der zweiten unteren Form (22) angeordnet ist,
in dem Trennschritt die erste untere Form (21) nach unten bewegt wird, so dass der Kontakt zwischen der Glasplatte (G) und der ersten unteren Form (21) unterbrochen wird, wonach die Glasplatte (G) auf die zweite untere Form (22) fallen gelassen wird, und
in dem zweiten Formschritt die Glasplatte (G) in einem Zustand geformt wird, in dem die erste untere Form (21) unterhalb der zweiten unteren Form (22) angeordnet ist.

8. Verfahren zur Herstellung einer Glasplatte (G) nach Anspruch 6 oder 7,
wobei die erste Form und die zweite Form eine gemeinsame obere Form (20) umfassen, die nach oben und unten bewegt werden kann,
in dem ersten Formschritt die Glasplatte (G) zwischen der oberen Form (20) und der unteren Form (21) geformt wird, und
in dem zweiten Formschritt die Glasplatte (G) zwischen der oberen Form (20) und der unteren Form (22) geformt wird.

9. Verfahren zur Herstellung einer Glasplatte (G) nach einem der Ansprüche 1 bis 8, wobei in dem ersten Formschritt das Formen in einem Zustand durchgeführt wird, in dem der Umfangskantenabschnitt der Glasplatte (G) eine Temperatur von 600 bis 700 °C aufweist.

10. Verfahren zur Herstellung einer Glasplatte (G) nach Anspruch 1 oder 2,
wobei die Formvorrichtung (2) eine obere Form (20) und eine untere Form aufweist, die nach oben und unten bewegt werden kann,
in dem ersten Formschritt die Glasplatte (G) zwischen der oberen Form (20) und der unteren Form geformt wird,
in dem Trennschritt die untere Form nach unten bewegt wird, so dass sich zumindest ein Bereich der Glasplatte (G), der in dem ersten Formschritt geformt wurde, von sowohl der oberen Form (20) als auch der unteren Form trennt, und
in dem zweiten Formschritt ein Bereich, der zumindest den Umfangskantenabschnitt der Glasplatte (G) umfasst, zwischen der oberen Form (20) und der unteren Form, die nach unten bewegt wurde, geformt wird.

11. Glasplatte (G),
die in eine gekrümmte Form pressgeformt wurde,
mit einer Dicke von 1,0 bis 3,0 mm, und
mit einer Ebenen-Eigenspannungsverteilung, die sich von einer Umfangskante aus in Richtung eines Mittelabschnitts für den gesamten Umfang der Glasplatte (G) verändert,
wobei die Ebenen-Eigenspannung eine Druckspannung an der Umfangskante ist und sich allmählich in eine Zugspannung in Richtung des Mittelabschnitts verändert,
die Ebenen-Eigenspannungsverteilung anzeigt, dass die Zugspannung eine Vielzahl von lokalen Maxima aufweist, und
in der Mittelabschnittseite von dem nächsten lokalen Maximum der Zugspannung zu der Umfangskante keine Druckspannung auftritt.

12. Glasplatte (G) nach Anspruch 11, wobei die Vielzahl von lokalen Maxima der Zugspannung eine Zugspannung anzeigt, die in Richtung der Umfangskante größer ist.

13. Glasplatte (G) nach Anspruch 11, wobei von dem Abschnitt bei dem ersten lokalen Maximum in Richtung des Mittelabschnitts keine Druckspannung der Ebenen-Eigenspannung auftritt.

14. Glaspatte (G) nach Anspruch 11, wobei zwischen den ersten beiden lokalen Maxima, die der Umfangskante am nächsten sind, keine Druckspannung der Ebenen-Eigenspannung auftritt.

## Revendications

1. Procédé de production d'une plaque de verre (G), comprenant : une étape de transport entrant consistant à transporter une plaque de verre chauffée (G) jusque dans un appareil de moulage (2) ;
une première étape de moulage consistant à mouler par compression la plaque de verre (G) dans un état où au moins une partie d'une partie de bord périphérique d'au moins l'une d'une face supérieure et d'une face inférieure de la plaque de verre (G) est exempte de contact ;
une étape de séparation consistant à séparer au moins une région moulée lors de la première étape de moulage, de la plaque de verre (G), de tout moule avec lequel la région était en contact ;
une seconde étape de moulage consistant à mouler par compression une région comprenant au moins une partie de la partie de bord périphérique de la plaque de verre (G) ; et
une étape de transport sortant consistant à transporter la plaque de verre (G) soumise à la seconde étape de moulage hors de l'appareil de moulage (2).

2. Procédé de production d'une plaque de verre (G) selon la revendication 1,
dans lequel, dans la première étape de moulage, le moulage est effectué dans un état où toute la partie de bord périphérique est exempte de contact, et
dans la seconde étape de moulage, toute la partie de bord périphérique est moulée.

3. Procédé de production d'une plaque de verre (G) selon la revendication 1 ou 2,
dans lequel l'appareil de moulage (2) a un premier moule et un second moule,
dans la première étape de moulage, la plaque de verre (G) est moulée par le premier moule,
dans l'étape de séparation, un contact entre la plaque de verre (G) et le premier moule est annulé, après quoi la plaque de verre (G) est agencée sur le second moule, et
dans la seconde étape de moulage, la plaque de verre (G) est moulée par le second moule.

4. Procédé de production d'une plaque de verre (G) selon l'une quelconque des revendications 1 à 3, dans lequel la plaque de verre (G) a une épaisseur de 3,0 mm ou moins.

5. Procédé de production d'une plaque de verre (G) selon l'une quelconque des revendications 1 à 4, comprenant en outre :
une étape de chauffage du verre à l'aide d'un four de chauffage (1), avant de transporter la plaque de verre (G) jusque dans l'appareil de moulage (2).

6. Procédé de production d'une plaque de verre (G) selon l'une quelconque des revendications 3 à 5,
dans lequel le premier moule comprend un premier moule inférieur (21),
le second moule comprend un second moule inférieur (22),
dans la première étape de moulage, le moulage est effectué dans un état où la plaque de verre (G) est supportée par le premier moule inférieur (21),
dans l'étape de séparation, un contact entre la plaque de verre (G) et le premier moule inférieur (21) est annulé, après quoi la plaque de verre (G) est agencée sur le second moule inférieur (22), et
dans la seconde étape de moulage, le moulage est effectué dans un état où la plaque de verre (G) est supportée par le second moule inférieur (22).

7. Procédé de production d'une plaque de verre (G) selon la revendication 6,
dans lequel le second moule inférieur (22) est formé sous la forme d'un cadre,
le premier moule inférieur (21) est configuré pour pouvoir se déplacer vers le haut et vers le bas à travers le cadre ou à l'extérieur du cadre du second moule inférieur (22),
dans la première étape de moulage, la plaque de verre (G) est moulée dans un état où le premier moule inférieur (21) est position au-dessus du second moule inférieur (22),
dans l'étape de séparation, le premier moule inférieur est déplacé vers le bas, de sorte qu'un un contact entre la plaque de verre (G) et le premier moule inférieur (21) est annulé, après quoi la plaque de verre (G) est autorisé à tomber sur le second moule inférieur (22), et
dans la seconde étape de moulage, la plaque de verre (G) est moulée dans un état où le premier moule inférieur (21) est position au-dessous du second moule inférieur (22).

8. Procédé de production d'une plaque de verre (G) selon la revendication 6 ou 7,
dans lequel le premier moule et le second moule comprennent un moule supérieur partagé (20) qui peut se déplacer vers le haut et vers le bas,
dans la première étape de moulage, la plaque de verre (G) est moulée entre le moule supérieur (20) et le premier moule inférieur (21), et
dans la première étape de moulage, la plaque de verre (G) est moulée entre le moule supérieur (20) et le second moule inférieur (22).

9. Procédé de production d'une plaque de verre (G) selon l'une quelconque des revendications 1 à 8, dans lequel, dans la première étape de moulage, le moulage est effectué dans un état où la partie de bord périphérique de la plaque de verre (G) est à une température de 600 à 700°C.

10. Procédé de production d'une plaque de verre (G) selon la revendication 1 ou 2,
dans lequel l'appareil de moulage (2) a un moule supérieur (20) et un moule inférieur pouvant se déplacer vers le haut et vers le bas,
dans la première étape de moulage, la plaque de verre (G) est moulée entre le moule supérieur (20) et le moule inférieur,
dans l'étape de séparation, le moule inférieur est déplacé vers le bas, de sorte qu'au moins une région moulée lors de la première étape de moulage, de la plaque de verre (G), se sépare à la fois du moule supérieur (20) et du moule inférieur, et
dans la seconde étape de moulage, une région comprenant au moins la partie de bord périphérique de la plaque de verre (G) est moulée entre le moule supérieur (20) et le moule inférieur qui a été déplacé vers le bas.

11. Plaque de verre (G),
moulée par compression en une forme incurvée,
ayant une épaisseur de 1,0 à 3,0 mm, et
ayant une distribution de contrainte résiduelle plane qui change d'un bord périphérique vers une partie centrale pour tout le périmètre de la plaque de verre (G),
dans laquelle la contrainte résiduelle plane est une contrainte de compression au bord périphérique et se transforme progressivement en contrainte de traction vers la partie centrale,
la distribution de contrainte résiduelle plane indiquant la contrainte de traction a une pluralité de maximums locaux, et
il n'y a pas de contrainte de compression du côté de la partie centrale depuis le maximum local le plus proche de la contrainte de traction jusqu'au bord périphérique.

12. Plaque de verre (G) selon la revendication 11, dans laquelle la pluralité de maximums locaux de la contrainte de traction indique une contrainte de traction qui est plus grande vers le bord périphérique.

13. Plaque de verre (G) selon la revendication 11, dans laquelle il n'y a pas de contrainte de compression de la contrainte résiduelle plane depuis la partie au niveau du premier maximum local vers la partie centrale.

14. Plaque de verre (G) selon la revendication 11, dans laquelle il n'y a pas de contrainte de compression de la contrainte résiduelle plane entre les deux premiers maximums locaux les plus proches du bord périphérique.
